# EUROPÄISCHE PATENTANMELDUNG

(11) **EP 1 114 849 A1**
(43) Veröffentlichungstag der Anmeldung: **11.07.2001**
(21) Anmeldenummer: 00125475.4
(22) Anmeldetag: 21.11.2000
(51) Int. Cl.: C09D 5/02, D04H 1/64, D06M 15/263, C08F 236/10

(54) **Wässrige Styrol-Butadien-Dispersionen zur Verfestigung von bituminierbaren Vliesstoffen**

(30) Priorität: 07.01.2000 DE 10000446
(71) Anmelder: PolymerLatex GmbH & Co.KG, 45764 Marl (DE)
(72) Erfinder: Müller, Gunther, Dr., 48301 Nottuln (DE); Daum, Helmut, 64342 Seeheim-Jugenheim (DE); Scheda, Willibald, 48249 Dülmen (DE)

(57) **Zusammenfassung**

Die Erfindung betrifft selbstvernetzende wäßrige Dispersionen zum Verfestigen von Vliesstoffen, die anschließend mit Bitumen getränkt werden.

## Beschreibung

Die Erfindung betrifft selbstvernetzende wäßrige Polystyrol-Butadien-Dispersionen zur Verfestigung von bituminierbaren Beschichtungsträgern wie beispielsweise bituminierte Dachbahnen sowie die mit diesen Polystyrolbutadien-Dispersionen verfestigte Vliesstoffe.

Die EP-OS 0 438 284 beschreibt eine wäßrige Polymeremulsion mit einem geringen freien Formaldehydgehalt, der durch die Verwendung eines formaldehydabspaltenden Mittels erreicht wird, es wird als Formaldehyd abspaltendes Mittel N-Methylolacrylamid eingesetzt. Die Verbindung wird zur Vernetzung von Polyvinylacetat und Vinylacetat-Styrol-Dispersionen eingesetzt.

WO 97/32930 beschreibt eine wäßrige Dispersion zur Beschichtung von Textilien aus einem hydrophilen Polyurethan (PU) und einem Copolymerisat aus Styrol, Butadien und weiteren mit den vorstehend genannten Monomeren copolymerisierbaren Monomeren. Diese PU-Dispersionen werden zur Beschichtung von Dachbahnen benutzt.

Die DE-OS 40 29 733 beschreibt gebundene Vliesstoffe, enthaltend ein Bindemittel aus einer Dispersion, die durch Polymerisation eines konjugierten Diens, einer α,ß ungesättigten Mono- oder Dicarbonsäure und hydroxylgruppenhaltiger olefinischer Monomere hergestellt wird.

Die US 4 125 663 offenbart ein Verfahren zur Herstellung von gebundenen Vliesstoffen, wobei der Polymerdispersion als Vernetzer Melamin/Formaldehydharze zugegeben werden.
Bituminierte Dachbahnen werden hergestellt, indem ein Beschichtungsträger mit Bitumen getränkt und/oder beschichtet wird. Die früher verwendeten Beschichtungsträger aus Karton wurden aufgrund der gestiegenen Anforderungen an diese Artikel durch Rohfilz, Jutegewebe, Glasvliese, Glasmischgewebe und vor allem durch Polyesterspinvliese sowie Polyesterstapelfaservliese ersetzt. Derartige, z.B. mit Dispersionsbinder verfestigte Vliesstoffe, müssen bei der Bituminierung und Endanwendung folgende Eigenschaften erfüllen:
- Geringe Dehnung bei 160 - 200 °C unter starker Zugbeanspruchung, hohe mechanische Festigkeit
   Die Einlagekonstruktion aus gebundenem Vliesstoff darf bei den Produktionsbedingungen der Bitumenimprägnierung und/oder -beschichtung nur eine geringe Dehnung zeigen. 1 % Dehnung darf bei 160 - 200 °C und den hohen Zugbeanspruchungen durch das hochviskose Bitumen und die hohen Produktionsgeschwindigkeiten nicht überschritten werden. Bei höheren Dehnungen werden beim Abkühlen und Aufwickeln der Dachbahnen Spannungen fixiert, die beim erneuten Erwärmen, z.B. beim Verschweißen der Nähte oder bei starker Sonneneinstrahlung, wieder freigesetzt werden. Dies würde zu Rissen in der Dachhaut führen. Die Richtung der Dehnung kann längs, quer oder diagonal verlaufen.
- Gute Haftung zu Bitumen
- Geringe Wasserempfindlichkeit, hohe Wasserdichtigkeit
   Bei nicht ausreichender Hydrophobie der gebundenen Vliesstoffe (Fasermaterial, Bindemittel) kann aufgrund der Dochtwirkung von Einzelfibrillen Wasser an den Schnittstellen der Dachbahnen eindringen. Die führt zur Trennung zwischen Bitumen und dem gebundenen Vliesstoff oder zu Frostschäden.
- Flexibilität und Dehnbarkeit der Konstruktion bei der Endanwendung
   Aufgrund von Temperaturschwankungen bei der Endanwendung (-40 °C bis + 80 °C) und unterschiedlichen Ausdehnungskoeffizienten verschiedener Baumaterialien unterliegt die gesamte Dachbahn größeren Dimensionsschwankungen. Ist die Gesamtkonstruktion zu steif und unflexibel, entstehen feine Risse, die in Kombination mit Feuchtigkeit und Kälte zur Zerstörung der Dachbahn führen. Aus diesem Grund ist es dringend erforderlich, daß bei Gebrauchstemperatur nicht nur das Bitumen, sondern auch die Einlage aus gebundenem Vliesstoff flexibel bleibt.

Überraschenderweise wurde gefunden, daß Styrolbutadiene, denen Verbindungen mit selbstvernetzende Gruppen einpolymerisiert wurden, zur Imprägnierung der Vliesstoffe geeignet sind. Die damit erhaltenen Endartikel haben bei hohen Temperaturen die geforderte Dimensionsstabilität und zeigen eine sehr geringe Wasserempfindlichkeit. Die mechanischen Eigenschaften bei Raumtemperatur sind vergleichbar zu den Standardsystemen.

Gegenstand der Erfindung sind selbstvernetzende wäßrige Polystyrol-Butadien-Dispersionen zur Verfestigung von bitumierbaren Vliesstoffen, zusammengesetzt aus folgenden Monomerkomponenten:
1) 20 bis 55 Teile, bezogen auf die Trockenmasse der dispersen Phase, mindestens eines konjugierten Diens,
2) 30 bis 80 Teile, bezogen auf die Trockenmasse der dispersen Phase, mindestens einer copolymerisierbaren vinylaromatischen Verbindung,
3) 0,1 bis 10 Teile, bezogen auf die Trockenmasse der dispersen Phase, mindestens einer polymerisierbaren organischen Carbonsäure und/oder deren Anhydride,
4) 1 bis 10 Teile mindestens eines Vernetzers,
5) 0 bis 20 Teile, bezogen auf die Trockenmasse der dispersen Phase, mindestens eines Derivates einer α,ß-ungesättigten Carbonsäure.

Als Komponente 1) eignet sich besonders 1,3-Butadien. Es können auch noch andere 1,3-Diene wie beispielsweise Isopren, Chlorisopren oder 2,3-Dimethylbutadien eingesetzt werden. Butadien ist bevorzugt.

Bevorzugte Komponente 2) ist Styrol. Andere Vinylaromaten, wie beispielsweise Methylstyrol oder Styrolcarbonsäuren, können ebenfalls eingesetzt werden.

Als einpolymerisierbare organische Carbonsäuren (Komponente 3) können beispielsweise Acrylsäure, Methacrylsäure oder Itaconsäure allein oder in Mischungen verwendet werden. Auch Maleinsäure oder Fumarsäure oder deren Anhydride können eingesetzt werden. Bevorzugt werden Acrylsäure und/oder Methacrylsäure eingesetzt.

Als Vernetzer (Komponente 4) sind prinzipiell Acryl- und Methacrylamide geeignet. Bevorzugt werden folgende Verbindungen eingesetzt: N-Methylolacrylamid, N-Methoxymethylacrylamid, N-Hydroxylmethylacrylamid, N-Methylolmethacrylamid, N-Methoxymethylmethacrylamid oder N-Hydroxylmethylmethacrylamid.

Als Derivate α,β-ungesättigter Carbonsäuren (Komponente 5) sind die folgenden geeignet: Acryl-, Methacrylamid und/oder -nitril.
Es können auch die folgend beschriebenen Mischungen der selbstvernetzenden Dispersionen zur Verfestigung von bitumierbaren Vliesstoffen eingesetzt werden.

Durch Abmischungen von "weichen" und "harten" Typen können so für die Anwendung unterschiedliche Vliesstoffeigenschaften (wie z.B. Biegsamkeit) beliebig eingestellt werden.

Eine harte SBR-Type hat beispielsweise folgende Zusammensetzung: 60 % Styrol, 28 % Butadien, 8% Acrylnitril, 2% Säure, 4% Vernetzer; eine weiche SBR-Type hat beispielsweise die folgende Zusammensetzung: 35 % Styrol, 42 % Butadien, 10% Acrylnitril, 7% Acrylamid, 2% Säure, 4% Vernetzer.

Im Allgemeinen werden Mengenverhältnisse zwischen 7 : 3 bis 0 : 10 weiche Komponente : harte Komponente gewählt.

Bevorzugt sind Mischungen zwischen den Mengenverhältnissen von 5 : 5 bis 1 : 9 weiche Komponente : harte Komponente, besonders von 3 : 7 bis 2 : 8 weiche Komponente : harte Komponente.

Die erfindungsgemäßen Dispersionen zur Verfestigung von Vliesstoffen können weitere Hilfs- und Zusatzstoffe enthalten wie z. B. anionische Emulgatoren, nichtionische Emulgatoren, Alterungsschutzmittel, Biozide, Entschäumer, pH-Puffer, Komplexbildner.

Ein weiterer Gegenstand der Erfindung sind verfestigte Vliesstoffe, wobei die Vliesstoffe mit einer selbstvernetzenden wäßrigen Polystyrol-Butadien-Dispersion zusammengesetzt aus folgenden Monomerkomponenten:
1) 20 bis 55 Teile, bezogen auf die Trockenmasse der dispersen Phase, mindestens eines konjugierten Diens,
2) 30 bis 80 Teile, bezogen auf die Trockenmasse der dispersen Phase, mindestens einer copolymerisierbaren vinylaromatischen Verbindung,
3) 0,1 bis 10 Teile, bezogen auf die Trockenmasse der dispersen Phase, mindestens einer polymerisierbaren organischen Carbonsäure und/oder deren Anhydride,
4) 1 bis 10 Teile mindestens eines Vernetzers,
5) 0 bis 20 Teile, bezogen auf die Trockenmasse der dispersen Phase, mindestens eines Derivates einer α,β-ungesättigten Carbonsäure,
verfestigt wurden.

Als Vliesstoffe sind alle bekannten Vliesstoffe des Stands der Technik geeignet, wie zum Beispiel solche aus Glas, Polymeren und Naturprodukten sowie Mischkonstruktionen, insbesondere aus Rohfilz, Jutegewebe, Glasvlies, Glasmischgewebe, Polyamid und Polyester. Bevorzugt werden Spinvliesstoffe und Stapelfaservliesstoffe eingesetzt. Besonders bevorzugt im Rahmen der Erfindung sind Polyesterspinvliese sowie Polyesterstapelfaservliese. Die eingesetzten Vliesstoffe sind wie üblich für diesen Verwendungszweck vorbereitetet, das heißt genadelt bzw. thermofixiert. Sie weisen ein Gewicht von 20 - 350 g/m2, bevorzugt 100 - 250 g/m2, auf.

Die Komponenten 1) bis 5) und weitere Hilfs- und Zusatzstoffe sind wie oben beschrieben enthalten.

### Die folgenden Beispiele sollen die Erfindung näher erläutern:

| **Monomer** | | **Beispiel 1** | **Beispiel 2** |
|---|---|---|---|
| 1,3-Butadien | | 32 Tle | 40 Tle |
| Styrol | | 62 Tle | 37 Tle |
| Acrylnitril | | 0 Tle | 10 Tle |

| | | | |
|---|---|---|---|
| Acrylamid | | 2 Tle | 7 Tle |
| Säure | | 2 Tle | 2 Tle |
| Vernetzer | | 2 Tle | 4 Tle |

Bei den anderen für die Emulsionspolymerisation wichtigen Einsatzstoffe wie z.B. Initiatoren, Emulgatoren, Molekulargewichtsregler und Alterungsschutzmittel sind die dem Stand der Technik entsprechenden Typen und Mengen für die Herstellung verwendet. Das Analoge gilt für das zur Herstellung verwendete Polymerisationsverfahren.

### Beispielhaftes Herstellungsverfahren

In einem Polymerisationskessel werden vollentsalztes Wasser, die üblichen Emulgatoren und Hilfsstoffe und die Monomeren zusammengegeben.

Der Ansatz wird auf ca. 50 °C aufgeheizt, danach wird der Radikalbildner zugegeben. Die Temperatur wird erhöht (ca. 90 °C) und die Polymerisation wird innerhalb von 6 - 8 h abgeschlossen. Man erhält eine koagulatfreie Dispersion.

Die Details der Herstellung sind in der DE-OS 38 40 512 (Hüls AG), S. 5 bis 7, in den Beispielen 1 bis 9 und A bis F beschrieben.
Die Bestimmung des Feststoffgehalts erfolgte nach DIN 53 189.

Folgende Dispersionen wurden hinsichtlich der anwendungstechnisch relevanten Eigenschaften charakterisiert:

| **Dispersion** | **Feststoffgehalt** | **Viskosität [mPas] Brookfield** | **pH** | **Glasübergangs-temperatur [°C]** |
|---|---|---|---|---|
| | **[%]** | | | |
| Vergleichsbeispiel 1 Standard (Styrolacrylat) | 50 | 100 | 4,5 | 30 |
| Vergleichsbeispiel 2 Standard (Reinacrylat) | 50 | 150 | 2,5 | 49 |
| Vergleichsbeispiel 3 (Beispiell ohne selbstvernetzende Gruppe) | 50 | < 100 | 8,5 | 44 |
| Beispiel 1 (selbstvernetzendes SBR) | 50 | 90 | 4,5 | 41 |
| Beispiel 2 (selbstvernetzendes SBR) | 40 | 25 | 8,0 | 25 |

Es wurden auch Mischungen der selbstvernetzenden SBR-Typen in die Prüfungen miteinbezogen. Durch Abmischungen einer "weichen" und einer "harten" Type können so für die Anwendung unterschiedliche Vliesstoffeigenschaften (wie z.B. Biegsamkeit) beliebig eingestellt werden

### Bestimmung der Dimensionsstabilität

Die Bestimmung erfolgte nach DIN 18192 (Punkt 5.7).
Zur Charakterisierung wird ein Spinnvlies am Mathis-Foulard (Spalt: -10) mit folgender Flotte schaumimprägniert:

| | |
|---|---|
| Wäßrige Dispersion (50 %ig) | 250 g |
| Rohagit SL 215 | 7,5 g (Schaummittel) |
| Rohagal 10 n | 1,0 g (Schaumstabilisator) |
| VE-Wasser | 241,5 g |

Das Rohvlies wird vor der Imprägnierung 5 min. bei 220 °C vorgeschrumpft. Nach dem Imprägnieren erfolgt die Trocknung und Kondensation bei 180 °C für 10 min. Die nachfolgend aufgeführten Ergebnisse sind Mittelwerte aus jeweils drei Einzelbestimmungen.

Rohagit SL 215 ist ein Schaummittel, das von der Röhm GmbH in den Handel gebracht wird und besteht aus einer wäßrigen Lösung eines Acrylpolymers.

Rohagal 10 n ist ein Schaumstabilisator, der von der Röhm GmbH in den Handel gebracht wird und besteht aus einem nichtionischen Tensid auf der Basis von Fettalkohol-Polyalkylether.

| **Dispersion** | **Binderauflage [%]** | **Dimensionsänderung Vlieslängs [%]** | **Dimensionsänderung Vliesquer [%]** |
|---|---|---|---|
| Vergleichsbeispiel 1 | 24,5 | 1,25 | 1,0 |
| Vergleichsbeispiel 2 | 24,0 | 1,25 | 1,25 |
| Vergleichsbeispiel 3 | 25,5 | 15 | 17 |
| Beispiel 1 | 24,0 | 1,0 | 1,0 |
| Beispiel 2 | 23,5 | 0,75 | 1,0 |
| Beispiel 3 (1 : 1 Mischung aus Beispiel 1 und 2) | 24,0 | 1,0 | 1,0 |

Die mit den erfindungsgemäßen Dispersionen hergestllten Vliesstoffe zeigen eine deutlich geringere Schrumpfung.

Spinnvliese, die mit Beispiel 1 und Beispiel 2 oder einer Mischung aus beiden imprägniert wurden, haben eine zu den Standardsystemen vergleichbare oder teilweise bessere Dimensionsstabilität. Diese Produkte erfüllen die in der DIN-Vorschrift geforderten Grenzwerte. Wird zu Ausrüstung ein SBR ohne selbstvernetzende Gruppen verwendet, so sind die Ergebnisse nach DIN 18192 nicht akzeptabel. Ein solches System kann als Vliesstoff nicht verwendet werden.

Aus der Praxis ist bekannt, daß durch Zugabe von Melamin-Formaldehyd-Harzen (MFH) oder ähnlichen Verbindungen, bei nicht ausreichender Dimensionsstabilität eine Verbesserung der Eigenschaften bewirkt werden kann. Wie in nachfolgender Übersicht gezeigt, ist dies auch im Falle von Vergleichsbeispiel 3 möglich. Die geforderten Werte bzw. die Ergebnisse von Beispiel 1 oder Beispiel 2 werden jedoch nicht erreicht.

| **Dispersion** | **Binderauflage [%]** | **Dimensionsänderung Vlies längs [%]** | **Dimensionsänderung Vlies quer [%]** |
|---|---|---|---|
| Vergleichsbeispiel 3 | 25,5 | 15 | 17 |
| Vergleichsbeispiel 4 (Vergleichsbeispiel 3 + 10 % MFH (fest auf fest)) | 24,0 | 3,0 | 2,5 |

Als Melamin-Formaldehydharz kommt beispielsweise das Harz Cassurit MT (Hersteller: Clariant) in Frage.

### Bestimmung der Steighöhe

Zur Überprüfung der Wasserempfindlichkeit und Kapillarität werden 3 cm breite Streifen der gebundenen und getrockneten Vliesstoffe vertikal in ein Wasserbad eingetaucht. Die Eintauchtiefe beträgt einen Zentimeter. Das Wasser hat nun die Möglichkeit, senkrecht an dem gebundenen Vliesstoff aufzusteigen. Man bestimmt die Steighöhe in Zentimetern nach 24 Stunden.

| **Dispersion** | **Binderauflage [%]** | **Steighöhe [cm]** |
|---|---|---|
| Vergleichsbeispiel 1 | 24,5 | < 1 |
| Vergleichsbeispiel 2 | 24,0 | < 1 |
| Vergleichsbeispiel 3 | 25,5 | 0 |
| Beispiel 1 | 24,0 | < 1 |
| Beispiel 2 | 23,5 | < 1 |
| Beispiel 3 | 24,0 | 1,0 |

### Bestimmung der Reißfestigkeit der gebundenen Vliesstoffe bei RT

Die Prüfung erfolgt in Anlehnung an die DIN EN ISO 527-1 und DIN EN ISO 527-3. Von den gebundenen Vliesstoffen werden Proben mit einer Länge von 15 cm und einer Breite von 5 cm ausgestanzt. Die Proben werden in einem klimatisierten Raum bei 23 °C und 50 % relativer Luftfeuchte 24 Stunden gelagert und anschließend mit einer Instron Zugprüfmaschine charakterisiert.

### Die Prüfparameter ergaben sich wie folgt:

| | |
|---|---|
| Abzugsgeschwindigkeit | 100 mm/min. |
| Vliesstoffdicke | 2 mm |
| Meßbereich | 0 - 5000 N |
| Einspannlänge | 50 mm |

Die Ergebnisse sind nachfolgend dargestellt:

| **Dehnung** | **Vergl.Bsp. 1 (SA) Kraft [N]** | **Beispiel 1 Kraft [N]** | **Beispiel 3 Kraft [N]** |
|---|---|---|---|
| 2 % | 126 | 165 | 115 |
| 3 % | 190 | 230 | 185 |
| 5 % | 262 | 310 | 256 |
| 10 % | 354 | 398 | 340 |
| 15 % | 424 | 458 | 400 |
| Kraft (max) | 803 | 744 | 701 |
| Dehnung (max) | 60 % | 53 % | 58 % |

### Temperaturbeständigkeit

Da wie oben beschrieben die gebundenen Vliesstoffe in einem 200 °C warmen Bitumenbad verarbeitet werden, ist die Änderung der mechanischen Eigenschaften nach Temperaturbeanspruchung von Interesse. Da die Styrolbutadien-Polymere im Gegensatz zu Styrolacrylaten und Reinacrylaten nach der Polymerisation weiterhin reaktive Doppelbindungen enthalten, die mit verschiedensten Partnern wie z.B. Radikale (Luftsauerstoff) bei hohen Temperaturen reagieren können, muß der Veränderung der Bindereigenschaften nach Temperaturbeanspruchung besonders Augenmerk geschenkt werden.
Die gebundenen Vliesstoffe wurden 30 min. bei 200 °C getempert und anschließend beurteilt. Im Vergleich zu den Standardsystemen Styrolacrylaten und Reinacrylaten sind die Vliesstoffe, die mit SBR ausgerüstet sind, z.T. stark bräunlich gefärbt. Da bei der Endanwendung der Vliesstoff jedoch von zwei Bitumenschichten (oben und unten) bedeckt wird und somit nicht direkt zu sehen ist, ist dieser rein optische Makel für das Anwendungssegment nicht relevant. Bei der Überprüfung der mechanischen Eigenschaften (Dimensionstabilität) nach Temperung konnte keine Verschlechterung der Ergebnisse festgestellt werden.

## Patentansprüche

1. Selbstvernetzende wäßrige Polystyrol-Butadien-Dispersion zur Verfestigung von bitumierbaren Vliesstoffen, zusammengesetzt aus folgenden Monomerkomponenten:
1) 20 bis 55 Teile, bezogen auf die Trockenmasse der dispersen Phase, mindestens eines konjugierten Diens,
2) 30 bis 80 Teile, bezogen auf die Trockenmasse der dispersen Phase, mindestens einer copolymerisierbaren vinylaromatischen Verbindung,
3) 0,1 bis 10 Teile, bezogen auf die Trockenmasse der dispersen Phase, mindestens einer polymerisierbaren organischen Carbonsäure und/oder deren Anhydride,
4) 1 bis 10 Teile mindestens eines Vernetzers,
5) 0 bis 20 Teile, bezogen auf die Trockenmasse der dispersen Phase, mindestens eines Derivates einer α,ß-ungesättigten Carbonsäure.

2. Dispersion nach Anspruch 1,
dadurch gekennzeichnet,
daß als Komponente 1) mindestens ein Monomer ausgewählt aus den Monomeren 1,3-Butadien, Isopren, Chlorisopren, 2,3-Dimethylbutadien, in der Dispersion enthalten ist.

3. Dispersion nach mindestens einem der Ansprüche 1-2,
dadurch gekennzeichnet,
daß als Komponente 2) mindestens ein Monomer, ausgewählt aus den Monomeren Styrol, Methylstyrol, Styrolcarbonsäuren, in der Dispersion enthalten ist.

4. Dispersion nach mindestens einem der Ansprüche 1-3,
dadurch gekennzeichnet,
daß als Komponente 3) mindestens ein Monomer, ausgewählt aus den Monomeren Acrylsäure, Methacrylsäure, Itaconsäure, Maleinsäure, Fumarsäure, in der Dispersion enthalten ist.

5. Dispersion nach mindestens einem der Ansprüche 1-4,
dadurch gekennzeichnet,
daß als Komponente 4) mindestens ein Monomer, ausgewählt aus den Monomeren N-Methylolacrylamid, N-Methoxymethylacrylamid, N-Hydroxylmethylacrylamid, N-Methylolmethacrylamid, N-Methoxymethylmethacrylamid oder N-Hydroxylmethylmethacrylamid, in der Dispersion enthalten ist.

6. Dispersion nach mindestens einem der Ansprüche 1-5,
dadurch gekennzeichnet,
daß als Komponente 5) mindestens ein Monomer, ausgewählt aus den Monomeren Acryl-, Methacrylamid und/oder -nitril, in der Dispersion enthalten ist.

7. Verfestigter Vliesstoff,
dadurch gekennzeichnet,
daß er mit einer selbstvernetzenden wäßrigen Polystyrol-Butadien-Dispersion, zusammengesetzt aus folgenden Monomerkomponenten:
1) 20 bis 55 Teile, bezogen auf die Trockenmasse der dispersen Phase, mindestens eines konjugierten Diens,
2) 30 bis 80 Teile, bezogen auf die Trockenmasse der dispersen Phase, mindestens einer copolymerisierbaren vinylaromatischen Verbindung,
3) 0,1 bis 10 Teile, bezogen auf die Trockenmasse der dispersen Phase, mindestens einer polymerisierbaren organischen Carbonsäure und/oder deren Anhydride,
4) 1 bis 10 Teile mindestens eines Vernetzers,
5) 0 bis 20 Teile, bezogen auf die Trockenmasse der dispersen Phase, mindestens eines Derivates einer α,ß-ungesättigten Carbonsäure,
verfestigt wurde.

8. Verfestigter Vliesstoff nach Anspruch 7,
dadurch gekennzeichnet,
daß als Komponente 1) mindestens ein Monomer, ausgewählt aus den Monomeren 1,3-Butadien, Isopren, Chlorisopren, 2,3-Dimethylbutadien, in der Dispersion enthalten ist.

9. Verfestigter Vliesstoff nach mindestens einem der Ansprüche 7-8,
dadurch gekennzeichnet,
daß als Komponente 2) mindestens ein Monomer, ausgewählt aus den Monomeren Styrol, Methylstyrol, Styrolcarbonsäure, in der Dispersion enthalten ist.

10. Verfestigter Vliesstoff nach mindestens einem der Ansprüche 7-9,
dadurch gekennzeichnet,
daß als Komponente 3) mindestens ein Monomer, ausgewählt aus den Monomeren Acrylsäure, Methacrylsäure, Itaconsäure, Maleinsäure, Fumarsäure, in der Dispersion enthalten ist.

11. Verfestigter Vliesstoff nach mindestens einem der Ansprüche 7-10,
dadurch gekennzeichnet,
daß als Komponente 4) mindestens ein Monomer, ausgewählt aus den Monomeren N-Methylolacrylamid, N-Methoxymethylacrylamid, N-Hydroxylmethylacrylamid, N-Methylolmethacrylamid, N-Methoxymethylmethacrylamid oder N-Hydroxylmethylmethacrylamid, in der Dispersion enthalten ist.

12. Verfestigter Vliesstoff nach mindestens einem der Ansprüche 7-11,
dadurch gekennzeichnet,
daß als Komponente 5) mindestens ein Monomer, ausgewählt aus den Monomeren Acryl-, Methacrylamid und/oder -nitril, in der Dispersion enthalten ist.

13. Verfestigter Vliesstoff nach mindestens einem der Ansprüche 7-12,
dadurch gekennzeichnet,
daß als Vliesstoffe aus Glas, Polymeren und Naturprodukten sowie deren Mischkonstruktionen, insbesondere aus Rohfilz, Jutegewebe, Glasvlies, Glasmischgewebe und Polyester eingesetzt werden.

14. Verfestigter Vliesstoff nach Anspruch 13,
dadurch gekennzeichnet,
daß als Vliesstoffe Polyesterspinvliese oder Polyesterstapelfaservliese eingesetzt werden.
